# EUROPEAN PATENT SPECIFICATION

(11) **EP 1 464 965 B1**
(45) Date of publication and mention of the grant of the patent: **08.03.2006**
(21) Application number: 04000688.4
(22) Date of filing: 15.01.2004
(51) Int. Cl.: G01N 35/10

(54) **Positioning system and method for a liquid transfer device**
Positionierungssystem und Verfahren für eine Flüssigkeitstransfereinrichtung
Système et méthode de positionnement pour un dispositif de transfert de liquide

(43) Date of publication of application: 06.10.2004
(73) Proprietor: Agilent Technologies Inc. a Delaware Corporation, Palo Alto, CA 94306 (US)
(72) Inventor: Kaltenbach, Patrick, 76337 Waldbronn (DE); Choikhet, Konstantin, 76337 Waldbronn (DE); Ple, Gerhard, 76337 Waldbronn (DE); Linowski, Clemens, 76337 Waldbronn (DE)
(74) Representative: Barth, Daniel Mathias

(56) References cited:
- WO-A-00/17093
- WO-A-01/82013
- WO-A-02/059570
- WO-A-02/070999
- WO-A-03/079029
- US-A- 5 443 792
- US-A- 5 529 754
- US-B2- 6 417 008

## Description

### BACKGROUND OF THE INVENTION

In analytical chemistry, especially in bioanalytical chemistry, a limited sample amount is often available for further processing, for example for further analysis. The samples are typically stored and handled in well plates, comprising one or more wells on a plate. Due to the limited sample amount, often just a few 10 µl or less, the liquid levels of the samples in the wells are usually very low.

US 5,855,851 discloses an apparatus for detection of a level of a liquid in a container using detection of electrostatic capacitance between the container holder and an electrode.

WO 02/070999 A2 discloses positioning a capillary by using a piezoelectric transducer allowing detecting contact with a solid surface. US 5,443,792 A discloses a pipetting device having a reference member for determining a refernce point for a pipetting needle. From WO 02/059570 A1 a probe tip alignment for precision liquid handler is known, wherein a locator well is used for aligning a probe tip.

### SUMMARY OF THE INVENTION

It is an object of the present invention to provide an improved positioning for transfer of liquids between at least one well and a transfer appliance.

In the context of the invention a transfer appliance includes but is not limited to all kinds of devices used to transfer liquids between different locations, e. g. sippers or pipettes, which can also be connected to intake equipment e. g. syringes or pumps. Transfer refers to the transfer of liquid from the well plate into the transfer appliance as well the transfer of liquid from the transfer appliance into the well plate. Liquids and fluids are considered to be synonymous terms, the term "liquid" used in the following for both terms.

Because of the low sample liquid levels and the small amount of liquid sample transferred, it necessary to improve the positioning of a transfer appliance relative to the at least one well of a well plate. This object is solved by the independent claims. Favorable embodiments are subject of further dependent claims.

The method preferably uses the generation of a current, caused upon contact between a first electrically conductive element of the well plate and the at least one transfer appliance at a contact point in step A) in order to determine the relative position of the transfer appliance and the well plate at this point of time of contact. Therefore the generation of the current indicates, that the transfer appliance contacts the first element of the well plate and can be used to determine the actual position of the well plate relative to the at least one transfer appliance at the point of contact and can also be used to determine a positioning error at this point of contact in the method step B). In step C) of the method, the information obtained in step B) about the positioning error can be used for further positioning of the well plate and the transfer appliance.

This further positioning can e. g. comprise the positioning of the transfer appliance in the well. Due to the improved positioning of the transfer appliance blockage of the transfer appliance by contacting the well bottom or the transfer of air due to insufficient transfer appliance immersion depth in the well can be reduced in comparison with conventional methods.

The method of positioning reduces positioning errors of the transfer appliance relative to the well plate. These positioning errors might be due to tolerances in the mechanics of the instrument, for example tolerances of the drive of the well plate handler responsible for transporting the well plate to the transfer position, tolerances in the positioning of the well plate on the well handler or the like.

The first electrically conductive element of the well plate can comprise different elements, which can be part of the well plate, e. g. an electrically conductive contact point protruding from the at least one well for contact with the transfer appliance. The first element can also comprise an element, which is in contact with the well plate, e. g. an electrically conductive foil covering the well plate. Such a foil, e. g. an aluminum foil can prevent the evaporation of the samples out of the wells of the well plate and can be fixed to the well plate by e. g. using a sealing apparatus, which can adhere the foil to the well plate.

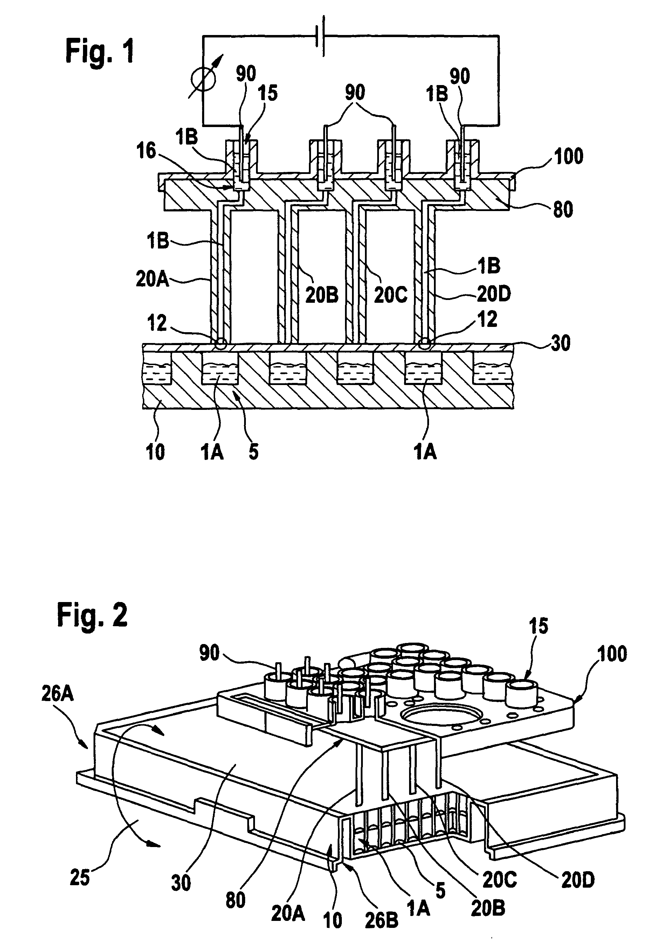

The current caused upon contact between the transfer appliance and the first electrically conductive element can be generated using different procedures. For example an electric field can be applied between two second electrically conductive elements of different transfer appliances in the case, that more than one transfer appliance is present. The second elements might comprise a tube of a pipette made of an electrically conductive material, e.g. metal or might comprise elements, which are in contact with the transfer appliance, e. g. a second liquid present in the transfer appliance. These second elements are distant at the beginning of the method and are therefore electrically isolated from each other. Upon contact of the second elements and the first element, the first element establishes an electrical connection between the at least two second elements, so that a current is caused and detected in step A) (see for example Figure 1). Using this embodiment, an electrically conductive foil covering the well plate is preferably used as the first element.

It is also possible to apply an electrical potential to a second element of the transfer appliance and a different electrical potential to the first element, e. g. an electrically conductive foil. Using this embodiment of the method, the current is caused upon contact of the second element of the transfer appliance with the first element, so that e. g. a direct electrical connection between the first and second element is established. An external electrical connection to the foil can be created, so that the foil can e. g. be grounded.

In a further embodiment of the method of the invention an observed one dimensional relative positioning value can be calculated using experimental data like time of occurrence of the current and velocity of the relative movement of the well plate versus the transfer appliance.

This one dimensional relative positioning value can then be compared in step B) with a theoretical positioning value thereby determining the actual one dimensional offset positioning error. The theoretical positioning value might for example be stored in a controlling system for example a microcomputer or an internal instrument controller, which can be connected to the transfer appliance. Using this variant of the method of the invention for a series of points of contact between the electrically conductive foil and the transfer appliance, a matrix of offset positioning errors for the whole well plate can be calculated.

As an alternative to the latter mentioned embodiment of the method of the invention, the position of the well plate might directly be registered. In step B) the position of a positioner for bringing the well plate in contact with the at least one transfer appliance is registered at the time of the contact between the transfer appliance and the first element, thereby determining a one dimensional offset positioning error at this point of contact. The positioner might e. g. comprise a well plate holder with a drive for moving the well plate towards the transfer appliance or might comprise a drive connected to the transfer appliances, moving the transfer appliances towards the well plate.

In a further embodiment of the method of the invention at least steps A) to B) are repeatedly carried out, the at least one transfer appliance being brought in contact with the electrically conductive foil at different points of contact in step B), so that for each point of contact a one-dimensional offset positioning error can be determined. In this case all points provide information for building the offset error matrix for the whole plate.

Using this variant of the method of the invention, at least three different one-dimensional positioning errors can be used to calculate the position of the whole well plate relative the transfer appliance in three-dimensional space. Therefore at least three one-dimensional pieces of information about the location of the well plate relative to the transfer appliances are used to calculate the three-dimensional position of the whole well plate. Using this method of the invention, further transfer steps can be carried out without the need to determine the position of the well plate anymore. Therefore the transfer steps carried out after the complete position of the well plate has been determined, can be carried out faster because no determination of the one-dimensional positioning error has to be performed. It is also possible to use more than three values of the one-dimensional positioning error at different points to determine the three-dimensional position of the well plate relative to the transfer appliances. In this case, the extra information obtained from the fourth, fifth etc. one-dimensional positioning error can be used to eliminate errors and enhance the accuracy of the calculated three-dimensional position of the well plate.

It is also possible just to use two one-dimensional offset positioning errors in order to calculate just the offset and the tilt of the well plate. Such a variant of the method of the invention might be sufficient e. g. when the positioning errors are relatively small.

The method might preferably comprise a method step D), wherein the first liquid is transferred between the well an the transfer appliance. During this transfer the first liquid might be transported from the well into the transfer appliance or vice versa. The step D) might be carried out, after the further positioning of the well plate relative to the transfer appliance in step C) for example the positioning of the transfer appliance in the well is done.

Advantageously in step D) the immersion depth of the at least one transfer appliance in the well is chosen in such away that it does not contact the bottom of the well. The information about the positioning error obtained in step B) of the method of the invention can be used to accurately immerse the transfer appliance in a liquid present in the well, e. g. the first liquid.

Preferably the at least one transfer appliance is driven to pierce through the electrically conductive foil as the first element in step C) or D) of the method. This means, that the electrically conductive foil is not removed before further positioning or immersing the transfer appliance in the liquid in the well.

Advantageously the first liquid in the well is transferred to a microfluidic device in method step D). Microfluidic devices normally comprise a substrate made of e.g. glass or silicon having conduits formed therein. These conduits can be filled with a gel matrix for the analysis of samples. Normally reservoirs are formed at the endpoints of the conduits in the substrate of the microfluidic device, which can be filled with an aqueous solution in which electrodes are immersed. These electrodes are used to apply an electric field across the conduits in order to electrokinetically transport the samples through the conduits using gel electrophoresis. Electrophoretic separation is often used in high throughput automated instruments, for example in the so called ALP-instruments (automated lap on a chip platform) comprising the above mentioned microfluidic devices. Especially in these ALP-instruments tolerances in the positioning of the well plate in the well plate handler can occur, for example a gripper can cause misalignment of the transfer appliances relative to the wells leading to positioning errors. Tolerances leading to positioning error might also occur, when the microfluidic device is positioned relative to the transfer appliance.

The above mentioned variant of the method of the invention has the advantage, that the first liquid transferred can be further analyzed and processed in a fast and reliable way in a microfluidic device for example using gel electrophoresis in a method step E) (see Figures 1 to 3). Especially the above mentioned ALP-instruments are well suited for further processing the first liquid.

When the first liquid is transferred from the wells to a microfluidic device, the first liquid is preferably transferred in step D) into the system of conduits formed in the microfluidic device, the conduits being in flow communication with containers containing a second liquid and electrodes being immersed in the second liquid (see for example Figures 1 and 2). The containers are preferably located on the above mentioned reservoirs, which are located at the endpoints of the conduits of the microfluidic device. In this case the electrodes in the containers immersed in the second liquid can fulfill different purposes. Firstly the electrodes can be used to apply an electric field to the second liquid, so that the method can be carried out, generating a current when the second liquid in the transfer appliances (second element) gets in contact with the electrically conductive foil (first element). Secondly, the electrodes can also be used to apply an electric field across the conduits formed in the microfluidic device, so that the first liquid transferred to the conduits of the microfluidic device can further be electrokinetically driven through the conduits for further processing.

Normally the first liquid comprises a solution containing analyte molecules. This analyte molecules can be selected from a group containing:
- nucleic acids, peptides and carbohydrates, inorganic or organic soluble ionic substances and soluble substances, which can be electrokinetically transported using e. g. micellar electrophoresis.

In step A) of the method, the well plate is preferably positioned on a moveable plate holder and the well plate is then transported to the transfer appliances by moving the plate holder.

The second liquid preferably comprises an aqueous solution, which can also be used to form the gel matrix filling the conduits of the microfluidic device. In this variant of the method of the invention the gel matrix is contained within the conduits of the microfluidic device and it provides the second liquid used for the method of the invention or is connected to it.

The method of the invention can be carried out using conventional transfer appliances. For example it is possible to use conventional transfer appliances comprising metal pipes. In order to carry out the method using such transfer appliances, electrical connections can be created to the metal pipes in orderto apply an electrical potential to the pipes (second element). On the other hand it is also possible to use the conventional ALP-instruments and simply use the electrodes already present in such instruments to apply an electric field to the second liquid within the transfer appliances.

A further object of the invention is an apparatus adapted for carrying out the method for positioning. Such an apparatus preferably comprises a detector for detection of the current caused upon contact of the first element and the transfer appliance. Such a detector might comprise an ammeter or a voltmeter. The apparatus preferably also comprises a processing unit for determination and calculation of the position of the well plate relative to the transfer appliance. This processing unit might be part of a microcomputer connected to the apparatus or might be part of an internal or external controller.

In the following the invention will be explained in more detail by the Figures and embodiments. All Figures are just simplified schematic representations presented for illustration purposes only.

### BRIEF DESCRIPTION OF THE DRAWINGS

Figure 1 shows a cross sectional schematic of a microfluidic device and its surrounding area in an ALP-instrument during step A) of the method of the invention.
Figures 2 and 3 show a perspective view of an ALP-instrument above a well plate.
Figures 4A and 4B depict diagrams showing the generation of the current during the method for positioning when the transfer appliances are in contact with the electrically conductive foil.

### DETAILED DESCRIPTION OF EMBODIMENTS OF THE INVENTION

Referring to Figure 1 an automated lab on a chip platform is shown in cross sectional view. The microfluidic device comprises a top part 100 made of a polymer or plastic which is mounted on top of a microfluidic chip 80. The top part 100 also comprises containers 15 which are located above the reservoirs 16 of the microfluidic chip 80. The reservoirs 16 are normally located at the end points of the micro channel system of conduits which are formed within the microfluidic chip 80. In this variant of the ALP-instrument, the microfluidic chip 80 also comprises four transfer appliances 20A, 20B, 20C and 20D. It is also possible to use microfluidic chips having just one, two, three or even more than four transfer appliances. Each container 15, that is connected to a system of conduits and its corresponding reservoir 16 are in flow communication with one transfer appliance via capillaries. Each transfer appliance 20A to 20D also holds a second liquid 1B inside the capillaries, the second liquid 1B also located in the reservoirs 16 and the containers 15 or is in flow connection to another liquid within those. Each transfer appliance can be connected to a plurality of wells, e. g. at least 6 wells. Electrodes 90 are immersed in each second liquid for application of an electric potential. All but one electrodes, that are connected to each one transfer appliance are normally set to a "zero current mode" during step C) of the method of the invention, the rest one electrode connected to each one transfer appliance is set to "constant voltage" mode, so that a defined potential is applied to each transfer appliance, For simplifying reasons an electrical field is only shown to be applied to the two electrodes 90 for the transfer appliances 20A and 20D in Fig. 1. At the end of step A) the transfer appliances 20A to 20D are in contact with the electrically conductive foil 30, for example an aluminum alloy foil, which covers the well plate 10. Upon contact of the transfer appliances 20A and 20D, the second liquid 1B to which an electric potential is applied, contacts the electrically conductive foil 30 at the contact points 12. A current is generated upon contact of the transfer appliances 20A and 20D to the electrically conductive foil 30, which can be detected and can be used to determine the positioning error of the well plate 10 relative to the transfer appliances. Afterwards in step C) or D), the transfer appliances 20A to 20D can preferably pierce through the electrically conductive foil 30 and can immerse in the first liquids 1A located in the wells 5 of the well plate 10 using information about the positioning error, transferring the first liquids 1A into the transfer appliances 20A to 20D.

Turning now to Figure 2, a perspective view of an ALP-instrument above a well plate 10 is shown during step A) of the method of the invention. The four transfer appliances 20A to 20D of the microfluidic chip 80 and the well plate 10 are moved towards each other until the transfer appliances get in contact with the electrically conductive foil 30 covering the well plate 10. Figure 2 also shows a plurality of reservoirs or containers 15. Normally an electrode 90 is immersed in each reservoir 15, but in this case just a few electrodes 90 are shown in order to simplify the Figure. Due to deviations of the tilt angle of the well plate in the gripper of a well plate holder, a misalignment or tilt 25 can be caused, with the consequence, that the two opposing edges 26A and 26B of the well plate 10 are on a different level.

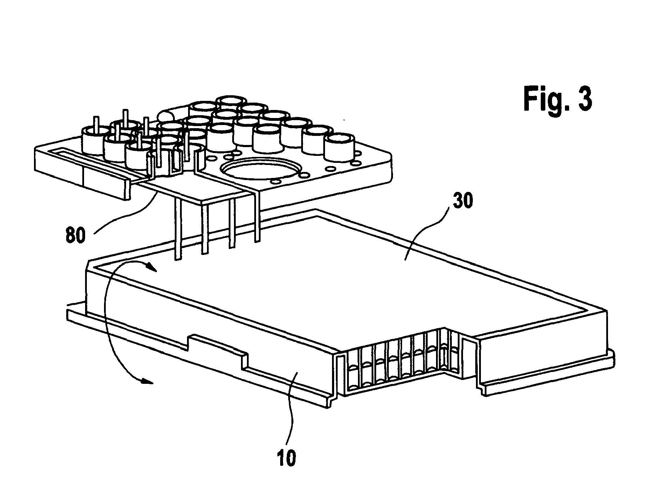

Referring to Figure 3, the well plate 10, shown in Fig. 2 was moved to a different position relative to the microfluidic device, resulting in a different point of contact between the transfer appliances and the electrically conductive foil 30 compared to Fig. 2. Carrying out the method for positioning for different points of contact results in the determination of an array of different one-dimensional offset positioning errors for each point of contact. These different one-dimensional offset positioning errors can be combined to calculate a more precise three-dimensional position of the whole well plate relative to the transfer appliances. After having calculated the position of the well plate relative to the transfer appliances, additional series of transfer steps can be carried out without the need to further detect the positioning error, because the information already obtained can be used to correct the immersion depth of the transfer appliances in the first liquids for each new point of contact during this subsequent series of transfer steps.

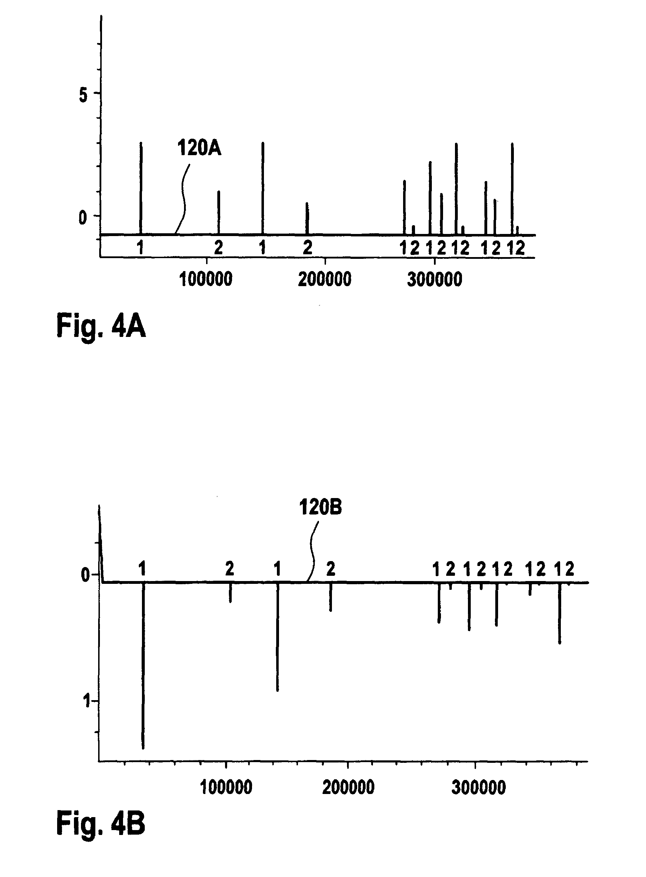

The diagrams shown in the Figures 4A and 4B show the generation of a current when the second liquid in the transfer appliances gets in contact with the electrically conductive foil. The Y-axis indicates the current in µA and the X-axis shows the timescale in milliseconds. The graphs denoted with 120A and 120B in the Figures 4A and 4B show the current jumps for two different transfer appliances when they are brought in contact with the foil in different points of contact like for example shown in the Figures 2 and 3. The peaks denoted with 1 indicate the current jump when the second liquid in the transfer appliance gets in contact with the electrically conductive foil when the well plate is moved towards the foil at the beginning of step B) of the method of the invention. The peaks denoted with 2 show a current, which is generated when the transfer appliances are transported out of the first liquid again and a small drop of liquid located at the tip of the transfer appliance subjected to an electrical potential gets in contact with the electrically conductive foil again. A voltage of 1600 V was applied in Fig. 4A, whereas a voltage of 200 V was applied in Figure 4B. Both diagrams show, that the transfer appliances were moved to seven different points of contact with the electrically conductive foil, brought in contact with the foil (peak 1) immersed in the first liquid in the wells and transported out of the liquid again (peak 2) at each point of contact.

The scope of the invention is not limited to the embodiments shown in the Figures. Indeed variations, especially concerning the number of transfer appliances are possible.

## Claims

1. A method for positioning at least one of a well plate (10) and a liquid transfer appliance (20A) adapted for transferring a first liquid (1A) between at least one well (5) of a well plate (10) and the liquid transfer appliance (20A), the method comprising the steps of:
A) moving the liquid transfer appliance (20A) and the well plate (10) towards each other and detecting a current caused upon contact and between the liquid transfer appliance (20A) and a first electrically conductive element (30) of the well plate (10),
B) determining the position of the well plate (10) relative to the liquid transfer appliance (20A) at the point of time of contact, and
C) using the position determined in step B) as a reference position for further positioning at least one of the well plate (10) and the liquid transfer appliance (20A).

2. The method of claim 1, wherein
- in step C) the further positioning includes positioning the at least one transfer appliance in the at least one well.

3. The method of claim 1 or 2, wherein
- electric potentials are applied to different elements, these elements electrically isolated from each other prior to step A),
- an electrical connection between the said elements is established in step A).

4. The method according to claim 3, wherein
- an electric field is applied between at least two second electrically conductive elements of different transfer appliances or between at least one second element of a transfer appliance and the first element.

5. The method according to claim 1 or any of the above claims, wherein
- the first element comprises a foil covering the at least one well.

6. The method of claim 4 or claim 5, wherein
- the second element comprises an electrically conductive material of the transfer appliance (20A).

7. The method of claim 4 or any of the claims 5 to 6, wherein
- the second element comprises a second liquid (1B) present in the transfer appliance (20A).

8. Method according to claim 1 or any one of the above claims, wherein
- in step B) an observed one-dimensional relative positioning value is calculated using the following experimental data: time of occurrence of the current and velocity of the relative movement of the well plate versus the transfer appliance,
- a one-dimensional offset positioning error is determined in step C) by comparing the observed positioning value with a theoretical positioning value.

9. Method according to claim 1 or any one of the above claims, wherein
- a positioner for bringing the well plate in contact with the at least one transfer appliance is present,
- in step B) the position of the positioner is registered at the time of the contact between the transfer appliance and the first element, thereby determining a one-dimensional offset positioning error.

10. Method according to claim 1 or any of the above claims, wherein
- at least the steps A) to B) are repeatedly carried out, the at least one transfer appliance brought in contact with the first element of the well at different points of contact in step B) determining a one-dimensional offset positioning error for each point of contact.

11. Method according to claim 10, comprising at least one of the features:
- at least three different one-dimensional positioning offset errors are used to calculate the position of the whole well plate relative to the transfer appliance,
- at least two different one-dimensional positioning offset errors are used to calculate the offset and the tilt error of the well plate relative to the transfer appliance.

12. The method of claim 1 or any of the above claims, further comprising the step of:
D) transferring the first liquid between the at least one of a well plate (10) and the liquid transfer appliance (20A).

13. The method of claim 12, wherein
- in step D) the first liquid is transferred from the well into the transfer appliance,
- the transfer appliance being immersed in the first liquid present in the well.

14. Method according to claim 13, comprising at least one of the features:
- wherein in step D) the immersion depth of the transfer appliance into the well is chosen in such a way, that it does not contact the bottom of the well;
- wherein the second element is a foil covering the well plate and in step D) the transfer appliance (20A) is driven to pierce through the foil (30), immersing in the first liquid (1A);
- wherein in step D) the first liquid (1A) is transferred to a microfluidic device (80).

15. Method according to claim 1 or any one of the above claims,
- wherein in a step D) first liquids (1A) in different wells (5) of the well plate (10) are transferred to different transfer appliances (20A to 20D), the transfer appliances being in flow communication with containers (15) containing a second liquid (1B) and electrodes (90) being immersed in the second liquid (1B).

16. Method according to claim 15,
- wherein the containers (15) are connected to conduits of a microfluidic device (80), the conduits filled with a gel matrix or buffer or standard solution.

17. Method according to claim 1 or any one of the above claims,
- wherein in a method step E) the first solution is analyzed in a microfluidic device.

18. Method according to claim 1 or any of the above claims,
wherein the first liquid comprises a solution containing analyte molecules, preferably selected from a group containing:
nucleic acids, peptides, carbohydrates, ionic organic substances, ionic inorganic substances and soluble substances, which can be electrokinetically transported within the conduits.

19. Method according to claim 1 or any of the above claims,
wherein in step A) the well plate is positioned on or in a movable plate holder and is transported towards the transfer appliance by moving the plate holder.

20. Use of a transfer appliance for a method according to claim 1 or any of the above claims.

21. An apparatus for positioning at least one of a well plate (10) and a liquid transfer appliance (20A) adapted for transferring a first liquid (1A) between at least one well (5) of the well plate (10) and the liquid transfer appliance (20A), comprising:
a positioner adapted for moving the liquid transfer appliance (20A) and the well plate (10) towards each other,
a detector adapted for detecting a current caused upon contact and between the liquid transfer appliance (20A) and a first electrically conductive element (30) of the well plate (10),
a processing unit adapted for determining the position of the well plate (10) relative to the liquid transfer appliance (20A) at the point of time of contact, and for using the determined position as a reference position for further positioning at least one of the well plate (10) and the liquid transfer appliance (20A).

## Patentansprüche

1. Verfahren zum Positionieren einer Platte mit Vertiefungen (10) und/oder einer Flüssigkeitsübertragungseinrichtung (20A), die für das Übertragen einer ersten Flüssigkeit (1A) zwischen einer Vertiefung (5) einer Platte mit Vertiefungen (10) und/oder der Flüssigkeitsübertragungseinrichtung (20A) geeignet ist, wobei das Verfahren folgende Schritte umfasst:
A) Bewegen der Flüssigkeitsübertragungseinrichtung (20A) und der Platte mit Vertiefungen (10) zueinander und Feststellen eines Stroms, der bei Kontakt zwischen der Flüssigkeitsübertragungseinrichtung (20A) und einem ersten elektrisch leitfähigen Element (30) der Platte mit Vertiefungen (10) entsteht,
B) Feststellen der Position der Platte mit Vertiefungen (10) relativ zu der Flüssigkeitsübertragungseinrichtung (20A) zum Zeitpunkt des Kontaktes und
C) Verwenden der in Schritt B) festgestellten Position als Bezugsposition zum weiteren Positionieren der Platte mit Vertiefungen (10) und/oder der Flüssigkeitsübertragungseinrichtung (20A).

2. Verfahren nach Anspruch 1, wobei
- das weitere Positionieren in Schritt C) das Positionieren der mindestens einen Flüssigkeitsübertragungseinrichtung in der mindestens einen Vertiefung umfasst.

3. Verfahren nach Anspruch 1 oder 2, wobei
- an verschiedene Elemente elektrische Potenziale angelegt werden, wobei diese Elemente vor Schritt A) voneinander elektrisch isoliert sind,
- in Schritt A) eine elektrische Verbindung zwischen den Elementen hergestellt wird.

4. Verfahren nach Anspruch 3, wobei
- zwischen mindestens zwei elektrisch leitfähigen Elementen verschiedener Flüssigkeitsübertragungseinrichtungen oder zwischen mindestens einem zweiten Element einer Flüssigkeitsübertragungsvorrichtung und dem ersten Element ein elektrisches Feld angelegt wird.

5. Verfahren nach Anspruch 1 oder irgendeinem der vorherigen Ansprüche, wobei
- das erste Element eine Folie umfasst, welche die mindestens eine Vertiefung bedeckt.

6. Verfahren nach Anspruch 4 oder Anspruch 5, wobei
- das zweite Element ein elektrisch leitfähiges Material der Flüssigkeitsübertragungseinrichtung (20A) umfasst.

7. Verfahren nach Anspruch 4 oder einem der Ansprüche 5 bis 6, wobei
- das zweite Element eine zweite Flüssigkeit (1B) umfasst, die in der Flüssigkeitsübertragungseinrichtung (20A) vorhanden ist.

8. Verfahren nach Anspruch 1 oder einem der vorherigen Ansprüche, wobei
- in Schritt B) ein beobachteter, eindimensionaler relativer Positionierungswert anhand folgender experimenteller Daten berechnet wird: Zeitpunkt des Auftretens des Stroms und Geschwindigkeit der relativen Bewegung der Platte mit Vertiefungen gegenüber der Übertragungseinrichtung,
- in Schritt C) ein eindimensionaler Positionierungs-Versatzfehler festgestellt wird, indem der beobachtete Positionierungswert mit einem theoretischen Positionierungswert verglichen wird.

9. Verfahren nach Anspruch 1 oder einem der vorherigen Ansprüche, wobei
- ein Positionierungsmittel vorhanden ist, um die Platte mit Vertiefungen in Kontakt mit der mindestens einen Übertragungseinrichtung zu bringen,
- in Schritt B) die Position des Positionierungsmittels zum Zeitpunkt des Kontaktes zwischen der Übertragungseinrichtung und dem ersten Element aufgezeichnet wird, wodurch ein eindimensionaler Positionierungs-Versatzfehler festgestellt wird.

10. Verfahren nach Anspruch 1 oder irgendeinem der vorherigen Ansprüche, wobei mindestens die Schritte A) bis B) mehrmals durchgeführt werden, wobei die mindestens eine Übertragungseinrichtung, die in Schritt B) an verschiedenen Kontaktpunkten in Kontakt mit dem ersten Element der Vertiefung gebracht wurde, einen eindimensionalen Positionierungs-Versatzfehler für jeden Kontaktpunkt feststellt.

11. Verfahren nach Anspruch 12, das mindestens eines der folgenden Merkmale umfasst:
- es werden mindestens drei verschiedene eindimensionale Positionierungs-Versatzfehler verwendet, um die Position der gesamten Platte mit Vertiefungen relativ zu der Übertragungseinrichtung zu berechnen,
- es werden mindestens zwei verschiedene eindimensionale Positionierungs-Versatzfehler verwendet, um den Versatz- und den Neigungsfehler der Platte mit Vertiefungen relativ zu der Übertragungseinrichtung zu berechnen.

12. Verfahren nach Anspruch 1 oder irgendeinem der vorherigen Ansprüche, das des Weiteren den folgenden Schritt umfasst:
D) Übertragen der ersten Flüssigkeit zwischen der Platte mit Vertiefungen (10) und/oder der Flüssigkeitsübertragungseinrichtung (20A).

13. Verfahren nach Anspruch 12, wobei
- in Schritt D) die erste Flüssigkeit von der Vertiefung in die Übertragungseinrichtung übertragen wird,
- die Übertragungseinrichtung in die erste Flüssigkeit, welche in der Vertiefung vorhanden ist, eingetaucht wird.

14. Verfahren nach Anspruch 13, das mindestens eines der folgenden Merkmale umfasst:
- wobei die Eintauchtiefe der Übertragungseinrichtung in die Vertiefung in Schritt D) so gewählt wird, dass sie nicht den Boden der Vertiefung berührt;
- wobei das zweite Element eine Folie ist, welche die Platte mit Vertiefungen bedeckt, und in Schritt D) die Übertragungseinrichtung (20A) angetrieben wird, um durch die Folie (30) zu stechen, wobei sie in die erste Flüssigkeit (1A) eintaucht;
- wobei in Schritt D) die erste Flüssigkeit (1A) zu einer Mikrofluidikeinheit (80) übertragen wird.

15. Verfahren nach Anspruch 1 oder irgendeinem der vorherigen Ansprüche,
- wobei in einem Schritt D) erste Flüssigkeiten (1A) in verschiedenen Vertiefungen (5) der Platte mit Vertiefungen (10) zu verschiedenen Übertragungseinrichtungen (20A bis 20D) übertragen werden, wobei die Übertragungseinrichtungen flussmäßig eine Verbindung mit Behältern (15) aufweisen, die eine zweite Flüssigkeit (1B) und Elektroden (90) enthalten, welche in die zweite Flüssigkeit (1B) eingetaucht sind.

16. Verfahren nach Anspruch 15,
- wobei die Behälter (15) mit Leitungen einer Mikrofluidikeinheit (80) verbunden sind, wobei die Leitungen mit einer Gelmatrix oder einer Puffer- bzw. einer Standardlösung gefüllt sind.

17. Verfahren nach Anspruch 1 oder irgendeinem der vorherigen Ansprüche,
- wobei in einem Verfahrensschritt E) die erste Lösung in einer Mikrofluidikeinheit analysiert wird.

18. Verfahren nach Anspruch 1 oder irgendeinem der vorherigen Ansprüche,
- wobei die erste Flüssigkeit eine Lösung umfasst, welche Analytmoleküle enthält, die vorzugsweise aus einer Gruppe ausgewählt sind, die:
Nukleinsäuren, Peptide, Kohlenhydrate, ionische organische Substanzen, ionische anorganische Substanzen und lösliche Substanzen, welche in den Leitungen elektrokinetisch transportiert werden können, enthält.

19. Verfahren nach Anspruch 1 oder irgendeinem der vorherigen Ansprüche,
- wobei in Schritt A) die Platte mit Vertiefungen auf oder in einem beweglichen Plattenhalter positioniert ist und in Richtung der Übertragungseinrichtung transportiert wird, indem der Plattenhalter bewegt wird.

20. Verwendung einer Übertragungseinrichtung für ein Verfahren nach Anspruch 1 oder irgendeinem der vorherigen Ansprüche.

21. Vorrichtung zum Positionieren einer Platte mit Vertiefungen (10) und/oder einer Flüssigkeitsübertragungseinrichtung (20A), die für das Übertragen einer ersten Flüssigkeit (1A) zwischen einer Vertiefung (5) der Platte mit Vertiefungen (10) oder/und der Flüssigkeitsübertragungseinrichtung (20A) geeignet ist, wobei die Vorrichtung Folgendes umfasst:
- ein Positionierungsmittel, das für das Bewegen der Flüssigkeitsübertragungseinrichtung (20A) und der Platte mit Vertiefungen (10) aufeinander zu eingerichtet ist;
- einen Detektor, der für das Feststellen eines Stroms geeignet ist, welcher bei Kontakt und zwischen der Flüssigkeitsübertragungseinrichtung (20A) und einem ersten elektrisch leitfähigen Element (30) der Platte mit Vertiefungen (10) entsteht.
- eine Verarbeitungseinheit, die in der Lage ist, die Position der Platte mit Vertiefungen (10) relativ zu der Flüssigkeitsübertragungseinrichtung (20A) zum Zeitpunkt des Kontaktes festzustellen und die festgestellte Position als Bezugsposition zu verwenden, um die Platte mit Vertiefungen (10) und/oder die Flüssigkeitsübertragungsvorrichtung (20A) weiter zu positionieren.

## Revendications

1. Procédé destiné à positionner au moins une plaque à puits (10) et un appareil de transfert de liquide (20A) adapté pour transférer un premier liquide (1A) entre au moins un puits (5) d'une plaque à puits (10) et l'appareil de transfert de liquide (20A), le procédé comprenant les étapes consistant à :
A) déplacer l'appareil de transfert de liquide (20A) et la plaque à puits (10) l'un vers l'autre et détecter un courant provoqué lors du contact entre l'appareil de transfert de liquide (20A) et un premier élément conducteur électrique (30) de la plaque à puits (10),
B) déterminer la position de la plaque à puits (10) par rapport à l'appareil de transfert de liquide (20A) au moment du contact, et
C) utiliser la position déterminée au cours de l'étape B) en tant que position de référence afin de positionner en outre au moins un parmi la plaque à puits (10) et l'appareil de transfert de liquide (20A).

2. Procédé selon la revendication 1, dans lequel
- au cours de l'étape C) le positionnement supplémentaire comprend le positionnement d'au moins un appareil de transfert dans au moins un puits.

3. Procédé selon la revendication 1 ou 2, dans lequel
- des potentiels électriques sont appliqués à différents éléments, ces éléments sont isolés sur le plan électrique les uns des autres avant l'étape A),
- une connexion électrique entre lesdits éléments est établie au cours de l'étape A).

4. Procédé selon la revendication 3, dans lequel
- un champ électrique est appliqué entre au moins deux seconds éléments conducteurs électriques de différents appareils de transfert ou entre au moins un second élément d'un appareil de transfert et le premier élément.

5. Procédé selon la revendication 1 ou l'une quelconque des revendications précédentes, dans lequel
- le premier élément comprend une feuille recouvrant au moins un puits.

6. Procédé selon la revendication 4 ou la revendication 5, dans lequel
- le second élément comprend un matériau conducteur électrique de l'appareil de transfert (20A).

7. Procédé selon la revendication 4 ou l'une quelconque des revendications 5 et 6, dans lequel
- le second élément comprend un second liquide (1B) présent dans l'appareil de transfert (20A).

8. Procédé selon la revendication 1 ou l'une quelconque des revendications précédentes, dans lequel
- au cours de l'étape B) une valeur observée de positionnement relatif unidimensionnel est calculée en utilisant les données expérimentales suivantes : la durée de l'occurrence du courant et la vitesse du mouvement relatif de la plaque à puits par rapport à l'appareil de transfert,
- une erreur de positionnement excentré unidimensionnel est déterminée au cours de l'étape C) en comparant la valeur observée du positionnement à une valeur théorique du positionnement.

9. Procédé la revendication 1 ou selon l'une quelconque des revendications précédentes, dans lequel
- un positionneur est présent afin de mettre la plaque à puits en contact avec au moins un appareil de transfert,
- au cours de l'étape B) la position du positionneur est enregistrée au moment du contact entre l'appareil de transfert et le premier élément, déterminant de ce fait une erreur de positionnement excentré unidimensionnel.

10. Procédé selon la revendication 1 ou l'une quelconque des revendications précédentes, dans lequel
- au moins les étapes A) et B) sont effectuées à plusieurs reprises, au moins un appareil de transfert mis en contact avec le premier élément du puits à différents points de contact au cours de l'étape B) déterminant une erreur de positionnement excentré unidimensionnel pour chaque point de contact.

11. Procédé selon la revendication 10, comprenant au moins une des caractéristiques suivantes :
- au moins trois erreurs de positionnement excentré unidimensionnel différentes sont utilisées pour calculer la position de la plaque à puits entière par rapport à l'appareil de transfert,
- au moins deux erreurs de positionnement excentré unidimensionnel différentes sont utilisées pour calculer l'excentrage et l'erreur d'inclinaison de la plaque à puits par rapport à l'appareil de transfert.

12. Procédé selon la revendication 1 ou l'une quelconque des revendications précédentes, comprenant en outre l'étape consistant à :
D) transférer le premier liquide entre au moins une plaque à puits (10) et l'appareil de transfert de liquide (20A).

13. Procédé selon la revendication 12, dans lequel
- au cours de l'étape D) le premier liquide est transféré à partir du puits dans l'appareil de transfert,
- l'appareil de transfert étant immergé dans le premier liquide présent dans le puits.

14. Procédé selon la revendication 13, comprenant au moins une des caractéristiques suivantes :
- dans lequel au cours de l'étape D) la profondeur d'immersion de l'appareil de transfert dans le puits est choisie d'une telle manière, qu'il n'entre pas en contact avec le fond du puits ;
- dans lequel le second élément est une feuille recouvrant la plaque à puits et au cours de l'étape D) l'appareil de transfert (20A) est dirigé pour percer la feuille (30), en s'immergeant dans le premier liquide (1A) ;
- dans lequel au cours de l'étape D) le premier liquide (1A) est transféré dans un dispositif microfluidique (80).

15. Procédé selon la revendication 1 ou l'une quelconque des revendications précédentes,
- dans lequel au cours de l'étape D) les premiers liquides (1A) dans différents puits (5) de la plaque à puits (10) sont transférés dans différents appareils de transfert (20A à 20D), les appareils de transfert étant en communication sur le plan de l'écoulement avec des récipients (15) contenant un second liquide (1B) avec des électrodes (90) qui sont immergées dans le second liquide (1B).

16. Procédé selon la revendication 15,
- dans lequel les récipients (15) sont reliés à des conduits d'un dispositif microfluidique (80), les conduits étaient remplis d'une matrice sous forme de gel ou d'une solution tampon ou étalon.

17. Procédé selon la revendication 1 ou l'une quelconque des revendications précédentes,
- dans lequel au cours d'une étape E) du procédé, la première solution est analysée dans un dispositif microfluidique.

18. Procédé selon la revendication 1 ou l'une quelconque des revendications précédentes,
- dans lequel le premier liquide comprend une solution contenant des molécules à analyser, choisies de préférence dans un groupe contenant :
des acides nucléiques, des peptides, des glucides, des substances organiques ioniques, des substances inorganiques ioniques et des substances solubles, qui peuvent être transportés de manière électrocinétique à travers les conduits.

19. Procédé selon la revendication 1 ou l'une quelconque des revendications précédentes,
- dans lequel au cours de l'étape A) la plaque à puits est positionnée sur ou dans un support mobile de plaque et est transportée vers l'appareil de transfert en déplaçant le support de plaque.

20. Utilisation d'un appareil de transfert pour un procédé selon la revendication 1 ou l'une quelconque des revendications précédentes.

21. Appareil destiné à positionner au moins un parmi une plaque à puits (10) et un appareil de transfert de liquide (20A) adapté pour transférer un premier liquide (1A) entre au moins un puits (5) d'une plaque à puits (10) et l'appareil de transfert de liquide (20A), comprenant :
- un positionneur adapté pour déplacer l'appareil de transfert de liquide (20A) et la plaque à puits (10) l'un vers l'autre,
- un détecteur adapté pour détecter un courant provoqué lors du contact entre l'appareil de transfert de liquide (20A) et un premier élément conducteur électrique (30) de la plaque à puits (10),
- une unité de traitement adaptée pour déterminer la position de la plaque à puits par rapport à l'appareil de transfert de liquide (20A) au moment du contact, et pour utiliser la position déterminée en tant que position de référence afin de positionner en outre au moins un parmi la plaque à puits (10) et l'appareil de transfert de liquide (20A).
